# FASCICULE DE BREVET EUROPEEN

(11) **EP 1 644 297 B1**
(45) Date de publication et mention de la délivrance du brevet: **01.11.2017**
(21) Numéro de dépôt: 04767470.0
(22) Date de dépôt: 25.06.2004
(51) Int. Cl.: C03C 17/36

(54) **VITRAGE MUNI D'UN EMPILEMENT DE COUCHES MINCES REFLECHISSANT LES INFRAROUGES ET/O RAYONNEMENT SOLAIRE ET APPLICATION D'UN TEL VITRAGE**
VERGLASUNG MIT GESTAPELTEN DÜNNEN SCHICHTEN, DIE INFRAROTSTRAHLEN UND/ODER SONNENSTRAHLUNG REFLEKTIEREN UND VERWENDUNG DIESER VERGLASUNG
GLAZING PROVIDED WITH STACKED THIN LAYERS WHICH REFLECT INFRARED RAYS AND/OR SOLAR RADIATION AND APPLICATION OF SUCH A GLAZING

(30) Priorité: 26.06.2003 FR 0307749
(43) Date de publication de la demande: 12.04.2006
(73) Titulaire: SAINT-GOBAIN GLASS FRANCE, 92400 Courbevoie (FR)
(72) Inventeur: BROCHOT, Jean-Pierre, F-93303 Aubervilliers (FR); BELLIOT, Sylvain, F-93303 Aubervilliers (FR)
(74) Mandataire: Saint-Gobain Recherche
(86) Numéro de dépôt international: PCT/FR2004/001622
(87) Numéro de publication internationale: WO 2005/000761

(56) Documents cités:
- EP-B- 0 506 507
- EP-B- 0 646 551

## Description

L'invention concerne les substrats transparents, de préférence rigides du type verre, qui sont munis d'empilements de couches minces comprenant au moins une couche à comportement métallique pouvant agir sur le rayonnement solaire et/ou le rayonnement Infrarouge de grande longueur d'onde, en vue de constituer des vitrages.

L'invention s'intéresse aux empilements alternant des couches à base d'argent et des couches en matériau diélectrique transparent du type oxyde ou métallique ou composés nitrurés, permettant de conférer aux vitrages des propriétés de protection solaire ou de basse émissivité (double-vitrage de bâtiment, pare-brise feuilleté de véhicule, ...). Elle s'intéresse plus particulièrement aux substrats verriers munis de tels empilements et qui doivent subir des opérations de transformation impliquant un traitement thermique à au moins 500°C : il peut notamment s'agir d'une trempe, d'un recuit ou d'un bombage.

Plutôt que de déposer les couches sur le verre après son traitement thermique (ce qui pose des problèmes augmentant les coûts de revient), on a, dans un premier temps, cherché à adapter les empilements de couches pour qu'ils puissent subir de tels traitements tout en gardant l'essentiel de leurs propriétés thermiques. Le but était donc d'éviter la détérioration des couches fonctionnelles, les couches d'argent notamment. Une solution, exposée dans le brevet EP-506 507, consiste à protéger les couches d'argent en les encadrant par des couches métalliques venant protéger les couches d'argent adjacentes à des couches d'oxyde diélectrique. On a alors un empilement bombable ou trempable, dans la mesure où il est au moins aussi performant dans la réflexion des infrarouges ou du rayonnement solaire avant qu'après le bombage ou la trempe. Cependant, l'oxydation / la modification des couches ayant protégé les couches d'argent sous l'effet de la chaleur conduisent à modifier sensiblement les propriétés optiques de l'empilement, notamment en induisant une augmentation de la transmission lumineuse et une modification de la colorimétrie en réflexion. Et ce chauffage tend également à créer des défauts optiques : des piqûres et/ou diverses altérations de petite taille conduisant à un niveau de flou significatif (on entend généralement par "altérations de petite taille" des défauts de taille inférieure à 5 micromètres, tandis que des "piqûres" s'entendent par des défauts de taille au-delà de 50 micromètres, notamment entre 50 et 100 micromètres, avec bien sûr la possibilité d'avoir également des défauts de taille intermédiaire, c'est-à-dire entre 5 et 50 micromètres).

Dans un second temps, on a alors cherché à mettre au point de tels empilements de couches minces qui soient capables de conserver à la fois leurs propriétés thermiques et leurs propriétés optiques après traitement thermique, en minimisant toute apparition de défauts optiques. L'enjeu était d'avoir ainsi des empilements de couches minces à performances optiques/thermiques fixes, qu'ils aient ou non à subir des traitements thermiques.

Une première solution a été proposée dans le brevet EP-718 250. Elle préconise d'utiliser au-dessus de la ou des couches fonctionnelles à base d'argent des couches-barrière à la diffusion de l'oxygène, notamment à base de nitrure de silicium, et de déposer directement les couches d'argent sur le revêtement diélectrique sous-jacent, sans interposition de couches de primage ou de couches métalliques de protection. Elle propose des empilements du type Si₃N₄/ZnO/Ag/Nb/ZnO/Si₃N₄ ou SnO₂/ZnO/Ag/Nb/Si₃N₄. Un empilement Si₃N₄/Nb/Ag/Nb/Si₃N₄ y est également décrit.

Une seconde solution a été proposée dans le brevet EP-847 965 : elle est davantage axée sur des empilements comprenant deux couches d'argent, et décrit l'utilisation à la fois d'une couche-barrière au-dessus des couches d'argent (comme précédemment) et d'une couche absorbante ou stabilisante, adjacente auxdites couches d'argent et permettant de les stabiliser.

Elle décrit des empilements du type :
SnO₂/ZnO/Ag/Nb/Si₃N₄/ZnO/Ag/Nb/WO₃ ou ZnO ou SnO₂/Si₃N₄

Dans les deux solutions, on remarque la présence de la couche métallique, en niobium en l'occurrence, sur les couches d'argent, permettant d'éviter aux couches d'argent le contact avec une atmosphère réactive oxydante ou nitrurante lors du dépôt par pulvérisation réactive respectivement de la couche de ZnO ou de la couche de Si₃N₄.

Une autre publication relative à des empilements à une ou deux couches d'argent, aux propriétés optiques ajustées sans forte évolution optique en cas de traitement thermique est le document WO-02 48065. On y décrit des empilements où au moins une couche absorbante dans le visible est insérée entre deux couches de matériau diélectrique, par exemple du type :
Si₃N₄/ZnO/Ag/ZnO/Si₃N₄TiN ou NbN/Si₃N₄/ZnO/Ag/ZnO/Si₃N₄
   ou
Si₃N₄/ZnO /Ag/Ti/ZnO/TiN/Si₃N₄/ZnO/Ag/Ti/ZnO/TiN/Si₃N₄

Le document WO 01/40131 décrit des vitrages feuilletés ou des unités de vitrage isolant de type bas-émissifs, capables de supporter un traitement thermique de telle manière que le vitrage traité a un aspect similaire ou compatible avec le vitrage non traité : les vitrages traités et non traités peuvent se côtoyer dans un système vitré en formant un ensemble homogène relativement uniforme à l'oeil nu (vitrages dits « matchable »). Cette relativement faible variation de propriété de l'empilement de couches au traitement thermique est caractérisée par une variation de colorimétrie en réflexion ΔE inférieure à environ 5 (avec ΔE = (ΔL*² + Δa*² + Δb*²)^{½}) et d'une variation Δa* inférieure à environ 0,8.

Ces vitrages sont dotés d'un empilement comprenant, à partir du verre, une couche de nitrure de silicium, une fine couche essentiellement métallique à base de nickel ou d'alliage de nickel (1 à 2 nm d'épaisseur), une couche d'argent, une fine couche (1-2 nm) essentiellement métallique à base de nickel ou d'alliage de nickel et une couche de nitrure de silicium.

Toutefois, la relativement faible variation colorimétrique s'accompagne d'une augmentation d'au moins 4% de la transmission lumineuse (variation de transmission lumineuse ΔT_{L} ≥ 4%, notamment de 5 %) avec notamment une T_{L} initialement dans la plage de 63 à 73 %, et après traitement thermique dans la plage de 68 à 78 %. Une variation de transmission lumineuse de cet ordre de grandeur est loin d'être un avantage dans la perspective d'associer côte à côte un vitrage brut et un vitrage traité thermiquement, car la différence d'aspect entre les deux vitrages se détecte nettement à l'oeil nu.

Le document EP 646 551 décrit également des empilements comprenant une couche sacrificielle en nickel ou nickel-chrome de chaque côté de la couche fonctionnelle métallique.

Le document WO 97/48649 décrit aussi un empilement trempable du type précédent avec deux fines couches de « blocage » métalliques, cette fois-ci à base de niobium sur une épaisseur de 0,7 à 2 nm.

On observe en soumettant ce vitrage à un traitement thermique de trempe l'apparition d'un flou intense et homogène, ainsi que de points de corrosion.

Ces deux solutions antérieures, qui reposent sur l'utilisation d'une sous-couche et d'une sur-couche de « blocage » métallique, faites du même métal, présentent donc des inconvénients notables.

L'invention a pour but de pallier ces inconvénients en cherchant à améliorer les empilements de couches minces décrits plus haut, notamment en cherchant à améliorer leur comportement face à des traitements thermiques du type bombage et/ou trempe, en particulier en ce qui concerne les évolutions optiques et l'apparition de défauts optiques.

L'invention pour objet un vitrage selon la revendication 1. Les revendications dépendantes explosent des variantes avantageuses. Ce vitrage comprend au moins un substrat transparent, notamment en verre, muni d'un empilement de couches minces comportant, dans cet ordre à partir du substrat, au moins :
(a) une première couche diélectrique,
(b) une couche métallique inférieure stabilisatrice faite d'un métal ou alliage métallique X,
(c) une couche fonctionnelle à propriétés de réflexion dans l'infrarouge et/ou dans le rayonnement solaire, notamment métallique,
(d) une couche métallique supérieure de blocage faite d'un métal ou alliage métallique Y,
(e) une deuxième couche diélectrique, et
(f) éventuellement une couche protectrice d'oxyde,
empilement dans lequel le métal ou alliage X de la couche inférieure stabilisatrice est différent du métal ou alliage Y de la couche supérieure de blocage.

Alors que l'art antérieur enseigne de manière univoque de protéger la couche fonctionnelle par encadrement entre deux couches métalliques b, d de nature identique, les inventeurs de la présente invention ont mis en évidence une très nette amélioration de la résistance au traitement thermique en ce qui concerne les propriétés optiques du vitrage lorsque l'on choisit deux métaux différents pour constituer lesdites couches b, d.

On considère qu'un alliage de deux métaux ou plus est une matière différente de chacun des métaux constitutifs à l'état pur. Selon la présente invention, il faudra néanmoins qu'une couche d'alliage ne contienne que des métaux différents de la deuxième couche métallique associée. On considère d'autre part que deux alliages sont différents s'ils n'ont pas la même composition quantitative ou qualitative.

L'amélioration obtenue selon l'invention réside en une faible évolution optique qui se caractérise par une variation de transmission lumineuse ΔT_{L} d'au plus 3 %, et/ou une variation de la colorimétrie en réflexion extérieur ΔE* entre avant et après traitement thermique d'au plus 3, sans flou, ni piqûre.

La conjugaison de la bonne qualité optique et des évolutions optiques limitées sont obtenues par le choix judicieux des couches métalliques différentes. Une hypothèse d'explication part du constat que le mouillage d'une goutte métallique A sur une couche métallique X différera du mouillage de X sur A. Cet effet est dû à des énergies de surface différentes pour A et X. Il est donc judicieux de choisir les métaux X et Y de façon à obtenir le meilleur mouillage de part et d'autre de la couche fonctionnelle d'argent (ou autre) de façon à avoir la meilleure adhésion et obtenir une protection maximale lors du traitement thermique.

La première couche de matériau diélectrique (a) comporte une couche barrière à la diffusion de l'oxygène choisie parmi les nitrures de silicium, renfermant éventuellement au moins un autre métal tel que l'aluminium ...

Cette couche diélectrique a essentiellement pour fonction de bloquer la diffusion de l'oxygène à l'intérieur de l'empilement, y compris à haute température. Le nitrure étant largement inerte face à une attaque oxydante, il ne subit aucune modification chimique (du type oxydation) ou structurelle notable lors d'un traitement thermique du type trempe. Il n'entraîne donc quasiment aucune modification optique de l'empilement en cas de traitement thermique, notamment en terme de niveau de transmission lumineuse. Cette couche peut aussi faire office de barrière à la diffusion d'espèces migrant du verre, des alcalins notamment. En outre, grâce à son indice de réfraction voisin de 2, il prend aisément place dans un empilement de couches du type bas-émissif.

Cette couche peut généralement être déposée sur une épaisseur d'au moins 5 nm, notamment d'au moins 10 nm, par exemple comprise entre 15 et 70 nm, notamment de l'ordre de 30 à 60 nm.

La couche métallique inférieure (b) peut être constituée d'un métal X choisi parmi le titane, le nickel, le chrome, le niobium, le zirconium, le tantale, l'aluminium ou d'un alliage métallique contenant au moins l'un de ces métaux. Parmi ces choix, un alliage de nickel et de chrome s'est révélé particulièrement satisfaisant.

L'épaisseur de la couche (b) est avantageusement choisie à une valeur suffisante pour que la couche métallique ne s'oxyde que partiellement au cours d'un traitement thermique tel que la trempe. De préférence, cette épaisseur est inférieure ou égale à 6 nm, comprise entre 1 et 6 nm, de préférence d'au moins 1,5 nm.

Un métal inférieur choisi parmi les métaux peu avides d'oxygène permet de limiter la diffusion d'oxygène résiduel à travers la couche d'argent et contribue à éviter l'apparition de défauts de type flou ou piqûres. Le métal inférieur s'oxydant peu pendant le traitement thermique, son épaisseur est avantageusement choisie de telle façon que la majeure partie de l'absorption lumineuse de l'empilement soit apportée par ce dernier.

La couche fonctionnelle (c) est typiquement une couche en argent, mais l'invention s'applique de façon identique à d'autres couches métalliques réfléchissantes, comme des alliages d'argent, contenant notamment du titane ou du palladium, ou des couches à base d'or ou de cuivre. Son épaisseur est notamment de 5 à 13 nm, de préférence de l'ordre de 6 à 12 nm.

La couche métallique supérieure (d) est constituée d'un métal Y choisi parmi le titane, le nickel, le chrome, le niobium, le zirconium, le tantale, l'aluminium et les alliages métalliques contenant au moins l'un de ces métaux, différent du métal ou alliage X de la couche (b). De manière avantageuse, le métal Y est choisi parmi le titane, le niobium, l'aluminium et le zirconium ; il s'agit préférentiellement de titane.

L'épaisseur de la couche (d) est avantageusement choisie à une valeur suffisante pour que la couche métallique ne s'oxyde que partiellement au cours d'un traitement thermique tel que la trempe. De préférence, cette épaisseur est inférieure ou égale à 6 nm, elle peut être aussi fine qu'environ 0,4 nm, et s'étend notamment dans la plage de l'ordre de 0,4 à 4 nm.

Un métal supérieur choisi parmi les métaux avides d'oxygène permet en outre, de bloquer la diffusion de l'oxygène à travers l'empilement et donc de protéger efficacement la couche fonctionnelle d'argent. Cette oxydation du métal supérieur entraîne cependant une évolution de la transmission lumineuse et l'épaisseur maximale de la couche métallique supérieure (d) peut être choisie de façon à limiter la variation ΔT_{L}.

Lorsque la couche inférieure (b) est faite d'un métal peu oxydable, tel que le nickel-chrome, et la couche supérieure (d) est faite d'un métal avide d'oxygène, tel que le titane, le niobium ou le zirconium, l'épaisseur de la couche métallique inférieure (b) est avantageusement choisie de façon à être supérieure à celle de la sur-couche (d). Ce choix sur les épaisseurs des couches métalliques permet de limiter encore plus efficacement l'évolution de la transmission lumineuse.

De manière avantageuse, la couche fonctionnelle (c) typiquement en argent est directement en contact avec les revêtements métalliques (b) et (d) disposés au-dessous et au-dessus d'elle.

La deuxième couche de matériau diélectrique (e) a une fonction similaire à la couche (a). Elle comporte une couche barrière à la diffusion de l'oxygène choisie parmi les nitrures de silicium, renfermant éventuellement au moins un autre métal tel que l'aluminium ...

Cette couche peut généralement être déposée sur une épaisseur d'au moins 5 nm, notamment d'au moins 10 nm, par exemple comprise entre 15 et 70 nm, notamment de l'ordre de 30 à 60 nm. Elle peut notamment avoir une épaisseur supérieure à celle de la première couche diélectrique (a).

Avantageusement, au moins un (en particulier chacun) des revêtements diélectriques peut comprendre une couche à base d'oxyde(s) métallique(s). Notamment, la couche diélectrique supérieure (e) peut comprendre à sa surface extérieure une couche d'oxyde (f) améliorant la résistance à la rayure de l'empilement.

Il peut s'agir d'une couche à base d'oxyde de zinc ou d'un oxyde mixte de zinc et d'un autre métal (du type Al). Il peut aussi s'agir d'oxydes comprenant au moins un des métaux suivants : Al, Ti, Sn, Zr, Nb, W, Ta. Un exemple d'oxyde mixte de zinc susceptible d'être déposé en couche mince selon l'invention est un oxyde mixte de zinc et d'étain contenant un élément additionnel tel que de l'antimoine, tel que décrit dans WO 00/24686.

L'épaisseur de cette couche d'oxyde peut être de 0,5 à 6 nm.

Un mode de réalisation non limitatif de l'invention consiste à prévoir un empilement comprenant la séquence : 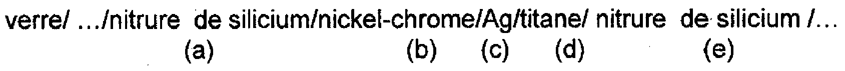 le nitrure de silicium pouvant contenir un autre élément minoritaire par rapport à Si du type Al.

En particulier l'empilement peut comprendre la double séquence (a)/(b)/(c)/(d)/(e)/(a')/(b')/(c')/(d')/(e') où a' est identique ou différent de a, de même pour b, b' c, c' d, d' e, e', et où les couches diélectriques intermédiaires (e) et (a') peuvent se confondre en une seule couche d'un même diélectrique. Cette variante est illustrée par l'empilement verre/.../nitrure de silicium/nickel-chrome/argent/titane/nitrure de silicium/nickel-chrome/argent/titane/nitrure de silicium.

On peut, en variante, associer aux couches de nitrure de silicium, par exemple une couche d'oxyde (SnO₂, oxyde mixte de zinc et d'étain, ...) en réduisant en conséquence l'épaisseur de la couche de nitrure de silicium.

La configuration d'empilement selon l'invention, permet de supprimer l'essentiel des défauts optiques, notamment des défauts de type flou ou piqûres, sur l'empilement de couches minces après traitement thermique.

Les substrats revêtus selon l'invention présentent, lorsqu'ils sont montés en double vitrage avec un autre substrat, une transmission lumineuse comprise entre 40 et 70%, notamment de 40 à 60%, et de préférence une sélectivité comprise entre 1,25 et 1,45, notamment de l'ordre de 1,4 (la sélectivité étant le rapport Transmission lumineuse : facteur solaire où le facteur solaire est le rapport entre l'énergie totale entrant dans un local à travers le vitrage et l'énergie solaire incidente selon le calcul de Parry Moon pour une masse d'air égale à 2).

Ils présentent une couleur en réflexion extérieure dans les nuances de bleu-vert.

Ils peuvent subir des traitements thermiques à une température d'au moins 100°C, notamment d'environ 130 °C en vue d'un assemblage de verre feuilleté, ou de plus de 500°C en vue d'un bombage, d'une trempe ou d'un recuit notamment (même des traitements de bombage différenciés d'un point à un autre du substrat), en conservant une absorption lumineuse importante même après trempe. Cette faible évolution optique se caractérise par une variation de transmission lumineuse ΔT_{L} (mesurée selon l'Illuminant D65) entre avant et après le bombage d'au plus 3 %, notamment d'au plus 2 à 2,5%, en particulier d'au plus 2 % et/ou une variation de colorimétrie en réflexion ΔE* entre avant et après le bombage d'au plus 3, notamment d'au plus 2,5. ΔE* est exprimé de la façon suivante dans le système de colorimétrie L, a*, b* : ΔE* = (ΔL*² + Δa*² + Δb*²)^{½}. Le critère de trempabilité généralement admis sur l'évolution de la colorimétrie en réflexion extérieure est que ΔE* entre avant et après traitement thermique doit être inférieur ou égal à 2. Il apparaît cependant qu'une valeur légèrement supérieure à 2 (mais inférieure à 3) est acceptable en vue d'une utilisation conjointe de volumes trempés et non trempés sur une même façade, si cette évolution colorimétrique est accompagnée d'une diminution raisonnable du niveau de réflexion, préférentiellement une variation en valeur absolue limitée à 2 (|ΔRₑₓₜ| ≤2), en particulier une variation d'au plus 1,5 (|ΔRₑₓₜ| ≤1,5).

Des doubles vitrages ainsi constitués manifestent en outre une variation colorimétrique faible entre l'incidence normale et une incidence non normale, à l'état initial comme à l'état trempé.

Le substrat revêtu peut être utilisé en vitrage feuilleté, l'empilement pouvant être accolé au film intercalaire à l'intérieur de l'assemblage feuilleté du côté de l'extérieur de l'espace délimité par le vitrage (face 2) ou de l'intérieur de l'espace délimité par le vitrage (face 3). Dans un tel vitrage, au moins un substrat peut être trempé ou durci, notamment celui portant l'empilement de couches. Le substrat revêtu peut aussi être associé à un autre verre au moins par une lame de gaz pour faire un vitrage multiple isolant (double vitrage). Dans ce cas, l'empilement fait de préférence face à la lame de gaz intermédiaire (face 2). Un double vitrage selon l'invention peut incorporer au moins un verre feuilleté.

Avantageusement, le substrat subit, une fois muni de l'empilement de couches minces, un traitement thermique à plus de 500°C en vue d'une trempe, avec après trempe une couleur en réflexion extérieure caractérisée par a* < 0 et b* < 0.

La présente invention se rapporte par ailleurs à un ensemble vitré incorporant plusieurs vitrages selon l'invention et notamment à un ensemble vitré incorporant au moins un vitrage ayant subi un traitement thermique et au moins un vitrage n'ayant pas subi de traitement thermique.

L'invention sera décrite à présent de façon plus détaillée à l'aide des exemples suivants non limitatifs.

Dans tous les exemples suivants, les couches sont déposées par pulvérisation cathodique assistée par champ magnétique, sur un verre clair silico-sodo-calcique de 4 mm d'épaisseur de type Planilux (verre commercialisé par Saint Gobain Glass).

Les couches à base de nitrure de silicium sont déposées à partir de cibles de Si dopé Al en atmosphère nitrurante. Les couches à base d'Ag sont déposées à partir de cibles Ag en atmosphère inerte, et les couches à base de Ti à partir de cible de Ti en atmosphère inerte également. Les couches en NiCr sont déposées en atmosphère inerte à partir de cibles d'alliage nickel-chrome dans les proportions pondérales 80/20.

### EXEMPLES 1 et 2

Ces exemples ont trait à un empilement:
Verre / Si₃N₄ : Al / NiCr / Ag / Ti / Si₃N₄ : Al
Si₃N₄ : Al signifie que le nitrure contient de l'aluminium.

Le tableau 1 suivant récapitule l'empilement de couches, avec les épaisseurs indiquées en nanomètres pour chacun des deux exemples :

**Tableau 1**

| verre | **Exemple 1** | **Exemple 2** |
|---|---|---|
| Si₃N₄ : Al | 37 nm | 37 nm |
| NiCr | 3,2 nm | 1,6 nm |
| Ag | 7 nm | 7 nm |
| Ti | 1,6 nm | 1,5 nm |
| Si₃N₄ : Al | 54 nm | 54 nm |

On a fait subir à l'ensemble de ces verres revêtus une opération de trempe à plus de 600 °C.

On évalue la qualité optique globale du verre après traitement thermique, en observant s'il y a eu apparition de défauts localisés ou non du type piqûres, flou. On éclaire le vitrage avec une lumière intense provenant par exemple d'un spot halogène. On attribue une note qualitative en fonction des paramètres suivants :

| **Défaut** | **Notation** |
|---|---|
| Flou intense et homogène avec piqûres dispersées sur toute la surface | --- |
| Flou intense localisé avec piqûres dispersées sur toute la surface ou Flou intense homogène sans piqûres | -- |
| Flou moyen localisé avec piqûres localisées | - |
| ou Flou intense localisé sans piqûres | |
| ou Piqûres dispersées sur toute la surface | |
| Flou moyen localisé ou piqûres localisées | + |
| Léger flou ou piqûres très localisées | ++ |
| Ni flou, ni piqûre | +++ |

On a ensuite évalué la variation d'aspect des verres avant et après le traitement thermique, par la mesure de la variation de transmission lumineuse ΔT_{L} et le niveau de réflexion en pourcentage (variation moyennée selon l'Illuminant D 65, observateur standard 2°) et de la variation d'aspect ΔE* (sans unité - dont la formule a été rappelée plus haut) en réflexion extérieure, en réflexion intérieure et en transmission. Ces valeurs, ainsi que les valeurs de transmission lumineuse T_{L} (toujours selon l'Illuminant D 65 2°) en %, de réflexion lumineuse côté extérieur Rₑₓₜ et intérieur Rᵢₙₜ également en %, les valeurs de L*, a* et b* en réflexion extérieure et intérieure (sans unité), la longueur d'onde dominante et la pureté en transmission, ainsi que le facteur solaire F.S. (Parry Moon, masse 2) sont données dans les tableaux 2 et 3 ci-dessous.

Les évolutions optiques sont mesurées sur des doubles vitrages constitués d'un substrat selon l'invention de 6 mm d'épaisseur, séparés par une lame d'argon de 12 mm d'épaisseur, la surface revêtue de couches du substrat selon l'invention étant tournée vers le substrat associé.

Les transmissions et réflexions lumineuses sont mesurées avec un appareil de mesure à sphère intégrante qui mesure le flux lumineux dans toutes les directions d'un côté ou de l'autre du substrat.

**Tableau 2**

| Ex. 1 | T_{L} (%) | λ_{d} (nm) | pₐ (%) | Rᵢₙₜ (%) | L* | a* | b* | Rₑₓₜ (%) | L* | a* | b* | F. S. (DIN) |
|---|---|---|---|---|---|---|---|---|---|---|---|---|
| avant | 50,4 | 487 | 6,4 | 11,4 | 40,2 | 4,4 | 3,2 | 13,4 | 43,3 | -1,7 | -4,9 | 39 |
| après | 52,4 | 486 | 7,7 | 11,8 | 40,7 | 4.3 | 4,9 | 12,1 | 41,3 | -0,6 | -3,8 | 39 |
| Δ | ΔT_{L} = 2, ΔE* = 1,7 | | | ΔRᵢₙₜ = 0,4, ΔE* = 1,8 | | | | ΔRₑₓₜ = -1,3, ΔE* = 2,6 | | | | |

**Tableau 3**

| Ex. 2 | T_{L} (%) | λ_{d} (nm) | pₑ (%) | Rᵢₙₜ (%) | L* | a* | b* | Rₑₓₜ (%) | L* | a* | b* | F. S. (DIN) |
|---|---|---|---|---|---|---|---|---|---|---|---|---|
| avant | 59,2 | 489 | 4,6 | 11,2 | 39,8 | 2,31 | 1,99 | 11,0 | 39,59 | -1,49 | -5,04 | 47 |
| après | 61,2 | 487 | 5,5 | 11,3 | 40,1 | 1,59 | 3,15 | 10,4 | 38,6 | -0,64 | -4,71 | 47 |
| Δ | ΔT_{L} = 2, ΔE* = 1,6 | | | ΔRᵢₙₜ = 0,1, Δ**E*** = 1,4 | | | | ΔRₑₓₜ = -0,6, ΔE* = 1,4 | | | | |

| | | | | | | | | | | | | |
|---|---|---|---|---|---|---|---|---|---|---|---|---|
| Avant = avant trempe Après après trempe Δ = évolutions optiques | | | | | | | | | | | | |

L'empilement selon les exemples 1 et 2 présentent près trempe une très bonne qualité optique sans flou ni point de corrosion, recevant la notation +++.

L'aspect colorimétrique du vitrage démontre une variation relativement faible en fonction de l'angle d'incidence, comme en témoigne le tableau 4 ci-dessous qui présente la variation d'aspect en réflexion extérieure pour différents angles d'incidence, cette variation étant calculée entre les vitrages trempés et les vitrages non trempés.

**Tableau 4**

| Angle d'incidence | 0 ° | 30 ° | 45 ° | 60 ° | 75 ° |
|---|---|---|---|---|---|
| ΔE* (Rₑₓₜ) | 2,6 | 2,2 | 2,1 | 1,5 | 0,8 |

D'une part, a* et b* ne varient que peu en fonction de l'angle d'incidence, et en outre dans le sens d'une limitation de la variation d'aspect lorsque l'on s'écarte de l'incidence normale de sorte que les critères de trempabilité sont encore mieux respectés. Ceci est un avantage notable, notamment pour la réalisation de grands ensembles vitrés qu'on souhaite voir de la même couleur sous tous les angles d'observation.

### EXEMPLE COMPARATIF 1

Il s'agit d'un empilement selon le document WO 01/40131 dans lequel les deux couches de blocage métalliques sont en nickel-chrome. Il est identique à l'exemple 1, à ceci près que la couche (d) en Ti est remplacée par une couche en NiCr de 1,2 nm d'épaisseur.

Lorsqu'il subit un traitement thermique de trempe tel que celui opéré aux exemples précédents, cet empilement manifeste une variation de transmission lumineuse supérieure à 4%, de l'ordre de 5%, ce qui est plus de deux fois supérieur à la variation observée avec l'invention.

### EXEMPLE COMPARATIF 2

Il s'agit d'un empilement similaire à celui de l'exemple comparatif 1 où les couches métalliques (b) et (d) sont toutes deux en titane.

Cet empilement démontre après chauffage un flou intense et homogène, ainsi que quelques points de corrosion, sanctionnés par la notation.

La variation de transmission lumineuse mesurée en sphère intégrante est acceptable, mais chute considérablement lorsqu'elle est mesurée dans la direction d'incidence, en raison de la forte diffusion donnant l'effet de flou.

### EXEMPLE 3

Cet exemple selon l'invention se distingue de l'exemple 1 par le fait que l'on intervertit les couches métalliques (b) et (d) : le titane devient couche inférieure et le nickel-chrome devient couche supérieure.

Lorsqu'il subit un traitement thermique de trempe, cet empilement: présente les évolutions optiques suivantes :

**Tableau 5**

| Ex. 3 | T_{L} (%) | λ_{d} (nm) | pₑ (%) | Rᵢₙₜ (%) | L* | a* | b* | Rₑₓₜ (%) | L* | a* | b* | F.S. (DIN) |
|---|---|---|---|---|---|---|---|---|---|---|---|---|
| avant | 53,1 | 518 | 2,1 | 10,7 | 38,9 | 7,8 | -6,2 | 14,5 | 44,9 | -1,3 | -5.0 | 41 |
| après | 52,9 | 491 | 4,9 | 11,1 | 39,7 | 5,1 | 0,4 | 14,2 | 44,4 | -2,4 | -3,6 | 40 |
| A | ΔT_{L} = -0,2, ΔE* = 4,7 | | | ΔRᵢₙₜ= 0.2, ΔE* = 7,2 | | | | ΔRₑₓₜ = -0,3, ΔE* = 1,8 | | | | |

L'empilement trempé a une qualité optique acceptable, mais révèle un léger flou sanctionné par la notation ++.

La comparaison de cet exemple avec l'exemple 1 montre qu'il est préférable de disposer le métal peu avide d'oxygène en couche inférieure et le métal plus avide d'oxygène en couche supérieure.

### EXEMPLE 4

Cet exemple selon l'invention se distingue de l'exemple 1 par le fait que la couche métallique (d) est cette fois-ci en niobium d'une épaisseur de 1,5 nm.

L'empilement est le suivant:
Verre / Si₃N₄ (37) / NiCr (3,2) / Ag (7) / Nb (1,5) / Si₃N₄ (54)

Les évolutions optiques sont reportées dans le tableau 6 ci-dessous.

**Tableau 6**

| Ex. 4 | T_{L} (%) | λ_{d} (nm) | pₑ (%) | Rᵢₙₜ (%) | L* | a* | b* | Rₑₓₜ (%) | L* | a* | b* | F.S. (DIN) |
|---|---|---|---|---|---|---|---|---|---|---|---|---|
| avant | 51,5 | 493 | 3,8 | 10,2 | 38.0 | 5,3 | -7,4 | 16,5 | 47,5 | -2,91 | -4,63 | 39 |
| après | 50,9 | 487 | 6,9 | 10,6 | 38,8 | 5,1 | -2,7 | 15,7 | 46,5 | -1.97 | -2,77 | 38 |
| Δ | ΔT_{L} = -0,6, ΔE* = 3,1 | | | ΔRᵢₙₜ = 0,4, ΔE* = 4,8 | | | | ΔRₑₓₜ = -0,8 ΔE* = 1,8 | | | | |

Cet empilement démontre après chauffage une très bonne qualité optique sans flou ni point de corrosion, recevant la notation +++.

### EXEMPLE COMPARATIF 3

Il s'agit d'un empilement: selon le document WO 97/48649 dans lequel les deux couches de blocage métalliques sont en niobium. Il est identique à l'exemple 1, à ceci près que les couches (b) et (d) sont en Nb avec une épaisseur comprise entre 0,7 et 2 nm.

Cet empilement démontre après chauffage un flou intense et homogène, ainsi que quelques points de corrosion, sanctionnés par la notation

La variation de transmission lumineuse mesurée en sphère intégrante est acceptable, mais chute considérablement lorsqu'elle est mesurée dans la direction d'incidence, en raison de la forte diffusion donnant l'effet de flou.

Ces exemples montrent que le choix de deux couches métalliques constituées de métaux différents apporte une amélioration très nette par rapport à un empilement utilisant le même métal ou alliage, même à des épaisseurs différentes, de part et d'autre de l'argent.

Ils ne doivent pas être considérés comme décrivant l'invention de manière limitative. L'invention s'applique également à des empilements utilisant une autre couche fonctionnelle, ainsi que plusieurs couches fonctionnelles.

Il est entendu que l'homme du métier est à même de réaliser différentes variantes de l'invention sans pour autant sortir du cadre du brevet tel que défini par les revendications.

## Revendications

1. Vitrage comprenant au moins un substrat transparent, notamment en verre, muni d'un empilement de couches minces comportant, dans cet ordre à partir du substrat, au moins :
(a) une première couche diélectrique comportant une couche barrière à la diffusion de l'oxygène choisie parmi les nitrures de silicium,
(b) une couche métallique inférieure stabilisatrice faite d'un métal ou alliage X,
(c) une couche fonctionnelle à propriétés de réflexion dans l'infrarouge et/ou dans le rayonnement solaire, notamment métallique,
(d) une couche métallique supérieure de blocage faite d'un métal ou alliage Y,
(e) une deuxième couche diélectrique comportant une couche barrière à la diffusion de l'oxygène choisie parmi les nitrures silicium, et
(f) éventuellement une couche protectrice d'oxyde,
**caractérisé en ce que** dans l'empilement le métal ou alliage X de la couche inférieure stabilisatrice est différent du métal ou alliage Y de la couche supérieure de blocage, la couche métallique inférieure stabilisatrice (b), respectivement la couche métallique supérieure (d), étant constituée d'un métal ou alliage X, respectivement Y, choisi parmi le titane, le nickel, le chrome, le niobium, le zirconium, le tantale, l'aluminium ou d'un alliage métallique contenant au moins l'un de ces métaux et une couche d'alliage X ou Y ne contenant que des métaux différents de l'autre couche associée, respectivement Y ou X.

2. Vitrage selon la revendication 1, **caractérisé en ce que** l'épaisseur de la couche diélectrique (a), respectivement (e), est d'au moins 5 nm, notamment comprise entre 15 et 70 nm.

3. Vitrage selon la revendication 1 ou 2, **caractérisé en ce que** la couche métallique inférieure stabilisatrice (b) est constituée d'un alliage nickel-chrome.

4. Vitrage selon l'une quelconque des revendications précédentes, **caractérisé en ce que** l'épaisseur de la couche (b) est comprise entre 1 et 6 nm.

5. Vitrage selon l'une quelconque des revendications précédentes, **caractérisé en ce que** la couche (c) est une couche métallique à base d'argent, titane, palladium, ou d'or.

6. Vitrage selon la revendication 5, **caractérisé en ce que** la couche (c) a une épaisseur de 6 à 12 nm.

7. Vitrage selon l'une quelconque des revendications précédentes, **caractérisé en ce que** la couche métallique supérieure de blocage (d) est constituée d'un métal Y choisi parmi le titane, le zirconium, le niobium et l'aluminium.

8. Vitrage selon l'une quelconque des revendications précédentes, **caractérisé en ce que** l'épaisseur de la couche (d) est inférieure à 6 nm.

9. Vitrage selon l'une des revendications précédentes, **caractérisé en ce que** l'épaisseur de la couche (b) est supérieure à celle de la couche (d).

10. Vitrage selon l'une quelconque des revendications précédentes, **caractérisé en ce qu'au** moins un (en particulier chacun) des revêtements diélectriques peut comprendre une couche à base d'oxyde(s) métallique(s).

11. Vitrage selon l'une quelconque des revendications précédentes, **caractérisé en ce qu'il** comprend une couche extérieure (f) à base d'oxyde d'au moins un métal choisi parmi Zn, Al, Ti, Sn, Zr, Nb, W, Ta.

12. Vitrage selon l'une quelconque des revendications précédentes, **caractérisé en ce que** l'empilement comprend la séquence :

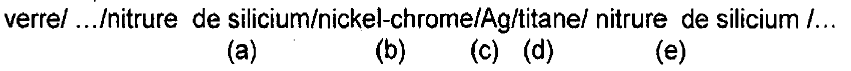

13. Vitrage selon la revendication 12, **caractérisé en ce que** l'empilement comprend la séquence :
.../nitrure de silicium/nickel-chrome/Ag/titane/ nitrure de silicium/nickel-chrome/Ag/titane/nitrure de silicium/...

14. Vitrage selon quelconque l'une des revendications précédentes, **caractérisé en ce qu'il** est monté en double vitrage avec un autre substrat et l'ensemble présente une transmission lumineuse comprise entre 40 et 70%.

15. Vitrage selon la revendication précédente, **caractérisé en ce qu'il** présente, monté en double vitrage, une sélectivité définie par le rapport entre la transmission lumineuse et le facteur solaire T_{L} / FS comprise entre 1,25 et 1,45.

16. Vitrage selon l'une quelconque des revendications précédentes, **caractérisé en ce qu'il** présente une couleur bleu-vert en réflexion.

17. Vitrage selon l'une quelconque des revendications précédentes, **caractérisé en ce que** le substrat subit, une fois muni de l'empilement de couches minces, un traitement thermique à plus de 500°C du type bombage, trempe, recuit, avec notamment une variation de transmission lumineuse ΔT_{L} induite par le traitement thermique d'au plus 3%, de préférence d'au plus 2 %, et/ou une variation de colorimétrie en réflexion induite par le traitement thermique AE* d'au plus 3 %, notamment d'au plus 2,5 %.

18. Application de vitrages selon l'une quelconque des revendications précédentes à la réalisation d'un ensemble vitré comprenant au moins un vitrage ayant subi un traitement thermique et au moins un vitrage n'ayant pas subi de traitement thermique.

19. Ensemble vitré incorporant plusieurs vitrages selon l'une quelconque des revendications 1 à 17.

20. Ensemble vitré selon la revendication précédente, **caractérisé en ce qu'il** incorpore au moins un vitrage ayant subi un traitement thermique et au moins un vitrage n'ayant pas subi de traitement thermique.

## Patentansprüche

1. Verglasung, die mindestens ein transparentes Substrat, insbesondere aus Glas, umfasst, das mit einem Stapel von Dünnschichten versehen ist, der in dieser Reihenfolge von dem Substrat ausgehend mindestens Folgendes beinhaltet:
(a) eine erste dielektrische Schicht, die eine Barriereschicht gegen die Diffusion des Sauerstoffs umfasst und aus Siliciumnitriden ausgewählt ist,
(b) eine stabilisierende untere metallische Schicht, die aus einem Metall oder einer Legierung X hergestellt ist,
(c) eine funktionelle Schicht mit Reflexionseigenschaften in Infrarotlicht und/oder in Sonneneinstrahlung, die insbesondere metallisch ist,
(d)eine obere metallische Sperrschicht, die aus einem Metall oder einer Legierung Y hergestellt ist,
(e)eine zweite dielektrische Schicht, die eine Barriereschicht gegen die Diffusion des Sauerstoffs umfasst und aus Siliciumnitriden ausgewählt ist, und
(f) gegebenenfalls eine Oxidschutzschicht,
**dadurch gekennzeichnet, dass** in dem Stapel das Metall oder die Legierung X der stabilisierenden unteren Schicht sich von dem Metall oder der Legierung Y der oberen Sperrschicht unterscheidet, wobei die stabilisierende untere metallische Schicht (b) bzw. die obere metallische Schicht (d) aus einem Metall oder einer Legierung X bzw. Y besteht, das bzw. die aus Titan, Nickel, Chrom, Niob, Zirkonium, Tantal, Aluminium oder einer Metalllegierung, die mindestens eines dieser Metalle enthält, ausgewählt ist, und eine Schicht der Legierung X oder Y nur andere Metalle als die andere assoziierte Schicht Y bzw. X enthält.

2. Verglasung nach Anspruch 1, **dadurch gekennzeichnet, dass** die Dicke der dielektrischen Schicht (a) bzw. (e) mindestens 5 nm beträgt, insbesondere zwischen 15 und 70 nm liegt.

3. Verglasung nach Anspruch 1 oder 2, **dadurch gekennzeichnet, dass** die stabilisierende untere metallische Schicht (b) aus einer Nickel-Chrom-Legierung besteht.

4. Verglasung nach einem der vorhergehenden Ansprüche, **dadurch gekennzeichnet, dass** die Dicke der Schicht (b) zwischen 1 und 6 nm liegt.

5. Verglasung nach einem der vorhergehenden Ansprüche, **dadurch gekennzeichnet, dass** die Schicht (c) eine metallische Schicht auf Silber-, Titan-, Palladium- oder Goldbasis ist.

6. Verglasung nach Anspruch 5, **dadurch gekennzeichnet, dass** die Schicht (c) eine Dicke von 6 bis 12 nm hat.

7. Verglasung nach einem der vorhergehenden Ansprüche, **dadurch gekennzeichnet, dass** die obere metallische Sperrschicht (d) aus einem Metall Y besteht, das aus Titan, Zirkonium, Niob und Aluminium ausgewählt ist.

8. Verglasung nach einem der vorhergehenden Ansprüche, **dadurch gekennzeichnet, dass** die Dicke der Schicht (d) kleiner als 6 nm ist.

9. Verglasung nach einem der vorhergehenden Ansprüche, **dadurchgekennzeichnet, dass** die Dicke der Schicht (b) größer als die der Schicht (d) ist.

10. Verglasung nach einem der vorhergehenden Ansprüche, **dadurch gekennzeichnet, dass** mindestens eine (insbesondere jede) der dielektrischen Beschichtungen eine Schicht auf der Basis eines bzw. mehrerer Metalloxide umfassen kann.

11. Verglasung nach einem der vorhergehenden Ansprüche, **dadurch gekennzeichnet, dass** sie eine äußere Schicht (f) auf der Basis eines Oxids von mindestens einem Metall, das aus Zn, Al, Ti, Sn, Zr, Nb, W, Ta ausgewählt ist, umfasst.

12. Verglasung nach einem der vorhergehenden Ansprüche, **dadurch gekennzeichnet, dass** der Stapel die folgende Abfolge umfasst:

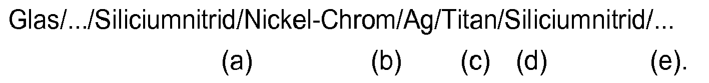

13. Verglasung nach Anspruch 12, **dadurch gekennzeichnet, dass** der Stapel die folgende Abfolge umfasst:
.../Siliciumnitrid/Nickel-Chrom/Ag/Titan/Silicumnitrid/Nickel-Chrom/Ag/Titan /Siliciumnitrid/...

14. Verglasung nach einem der vorhergehenden Ansprüche, **dadurch gekennzeichnet, dass** sie als Doppelverglasung mit einem anderen Substrat montiert wird und die Einheit eine Lichtdurchlässigkeit zwischen 40 und 70 % aufweist.

15. Verglasung nach einem der vorhergehenden Ansprüche, **dadurch gekennzeichnet, dass** sie als Doppelverglasung montiert eine Selektivität, die von dem Verhältnis zwischen der Lichtdurchlässigkeit und dem Gesamtenergiedurchlassgrad T_{L}/g definiert wird, zwischen 1,25 und 1,45 aufweist.

16. Verglasung nach einem der vorhergehenden Ansprüche, **dadurch gekennzeichnet, dass** sie bei Reflexion eine blau-grüne Farbe aufweist.

17. Verglasung nach einem der vorhergehenden Ansprüche, **dadurch gekennzeichnet, dass** das Substrat, sobald es mit dem Stapel von Dünnschichten versehen wurde, einer Wärmebehandlung bei mehr als 500 °C vom Biegungs-, Härtungs-, Glühtyp unterzogen wird, mit insbesondere einer Änderung der Lichtdurchlässigkeit ΔT_{L}, die von der Wärmebehandlung induziert wird, von höchstens 3 %, vorzugsweise höchstens 2 % und/oder einer Änderung der Kolorimetrie bei Reflexion, die von der Wärmebehandlung induziert wird, ΔE* von höchstens 3 %, insbesondere höchstens 2,5 %.

18. Anwendung von Verglasungen nach einem der vorhergehenden Ansprüche auf die Herstellung einer verglasten Einheit, die mindestens eine Verglasung, die einer Wärmebehandlung unterzogen wurde, und mindestens eine Verglasung, die keiner Wärmebehandlung unterzogen wurde, umfasst.

19. Verglaste Einheit, die mehrere Verglasungen nach einem der Ansprüche 1 bis 17 integriert.

20. Verglaste Einheit nach dem vorhergehenden Anspruch, **dadurch gekennzeichnet, dass** sie mindestens eine Verglasung, die einer Wärmebehandlung unterzogen wurde, und mindestens eine Verglasung, die keiner Wärmebehandlung unterzogen wurde, integriert.

## Claims

1. A glazing assembly comprising at least one transparent substrate, especially made of glass, provided with a thin-film multilayer comprising, in the following order starting from the substrate, at least:
(a) a first dielectric layer comprising a barrier layer acting as a barrier to the diffusion of oxygen and chosen from silicon nitrides;
(b) a lower stabilizing layer made of a metal or metal alloy X;
(c) a functional layer having reflection properties in the infrared and/or in the solar radiation, especially a metal layer;
(d) an upper metal blocking layer made of a metal or metal alloy Y;
(e) a second dielectric layer comprising a barrier layer acting as a barrier to the diffusion of oxygen and chosen from silicon nitrides; and
(f) optionally, a protective oxide layer;
**characterized in that** in the multilayer the metal or alloy X of the lower stabilizing layer is different from the metal or alloy Y of the upper blocking layer, the stabilizing lower metal layer (b), respectively the upper metal layer (d), is made of a metal or alloy X, respectively Y, chosen from titanium, nickel, chromium, niobium, zirconium, tantalum, aluminum or a metal alloy containing at least one of these metals and an alloy layer X or Y containing only metals different from the other associated layer, respectively Y or X.

2. The glazing assembly as claimed in claim 1, **characterized in that** the thickness of the dielectric layer (a) and (e), respectively, is at least 5 nm, especially between 15 and 70 nm.

3. The glazing assembly as claimed in claim 1 or, **characterized in that** the stabilizing lower metal layer (b) is made of a nickel-chromium alloy.

4. The glazing assembly as claimed in any one of the preceding claims, **characterized in that** the thickness of the layer (b) is between 1 and 6 nm.

5. The glazing assembly as claimed in any one of the preceding claims, **characterized in that** the layer (c) is a metal layer based on silver, titanium, palladium or gold.

6. The glazing assembly as claimed in claim 5, **characterized in that** the layer (c) has a thickness of 6 to 12 nm.

7. The glazing assembly as claimed in any one of the preceding claims, **characterized in that** the upper metal blocking layer (d) is made of a metal Y chosen from titanium, zirconium, niobium and aluminum.

8. The glazing assembly as claimed in any one of the preceding claims, **characterized in that** the thickness of the layer (d) is less than 6 nm.

9. The glazing assembly as claimed in one of the preceding claims, **characterized in that** the thickness of the layer (b) is greater than that of the layer (d).

10. The glazing assembly as claimed in any one of the preceding claims, **characterized in that** at least one (in particular each) of the dielectric coatings may comprise a layer based on one or more metal oxides.

11. The glazing assembly as claimed in any one of the preceding claims, **characterized in that** it comprises an outer layer (f) based on an oxide of at least one metal chosen from Zn, Al, Ti, Sn, Zr, Nb, W, Ta.

12. The glazing assembly as claimed in any one of the preceding claims, **characterized in that** the multilayer comprises, on glass, the sequence:

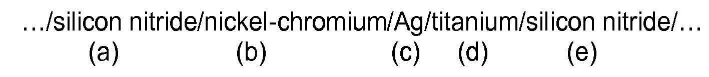

13. The glazing assembly as claimed in claim 12, **characterized in that** the multilayer comprises the sequence:
.../silicon nitride/nickel-chromium/Ag/titanium/silicon nitride/nickel-chromium/Ag/titanium/silicon nitride/...

14. The glazing assembly as claimed in any one of the preceding claims, **characterized in that** it is mounted with another substrate as a double glazing assembly and the unit has a light transmission of between 40 and 70%.

15. The glazing assembly as claimed in the preceding claim, **characterized in that** it has, fitted as a double-glazing unit, a selectivity defined by the ratio of the light transmission to the solar factor, T_{L}/SF, of between 1.25 and 1.45.

16. The glazing assembly as claimed in any one of the preceding claims, **characterized in that** it has a blue-green color in reflection.

17. The glazing assembly as claimed in any one of the preceding claims, **characterized in that** the substrate, once it has been provided with the thin-film multilayer, undergoes a heat treatment at more than 500°C, of the bending, toughening or annealing type, especially with an light transmission change ΔT_{L} induced by the heat treatment of at most 3 %, preferably of at most 2 %, and/or a change in colorimetric response in reflection induced by the heat treatment ΔE* of at most 3 %, especially of at most 2.5 %.

18. Application of glazing assemblies as claimed in any one of the preceding claims to the production of a glazed unit comprising at least one glazing assembly that has undergone a heat treatment and at least one glazing assembly that has not undergone heat treatment.

19. A glazed unit incorporating several glazing assemblies as claimed in any one of claims 1 to 17.

20. The glazed unit as claimed in the preceding claim, **characterized in that** it incorporates at least one glazing assembly that has undergone a heat treatment and at least one glazing assembly that has not undergone heat treatment.
